# EUROPEAN PATENT SPECIFICATION

(11) **EP 4 580 852 B1**
(45) Date of publication and mention of the grant of the patent: **03.06.2026**
(21) Application number: 22772605.6
(22) Date of filing: 01.09.2022
(51) Int. Cl.: B29C 41/14, B29C 41/00, B29C 41/52, A41D 19/00, C08K 3/04

(54) **PROCESS FOR MANUFACTURING NITRILE GLOVE AND NITRILE GLOVE PRODUCT RESULTING THEREFROM**
VERFAHREN ZUR HERSTELLUNG EINES NITRILHANDSCHUHS UND DARAUS RESULTIERENDES NITRILHANDSCHUHPRODUKT
PROCÉDÉ DE FABRICATION DE GANT EN NITRILE ET PRODUIT DE GANT EN NITRILE RÉSULTANT DE CELUI-CI

(43) Date of publication of application: 09.07.2025
(73) Proprietor: SRI TRANG GLOVES (THAILAND) PUBLIC COMPANY LIMITED, Hat Yai, Songkhla 90230 (TH)
(72) Inventor: JIROJKUL, Jarinya, Hat Yai, Songkhla 90230 (TH); KAEWKLUM, Sirithorn, Hat Yai, Songkhla 90230 (TH); FAIBUNCHAN, Parisa, Hat Yai, Songkhla 90230 (TH)
(74) Representative: Patentanwaltskanzlei Matschnig & Forsthuber OG
(86) International application number: PCT/IB2022/058204
(87) International publication number: WO 2024/047383

(56) References cited:
- EP-A2- 0 356 580
- WO-A1-2006/129361
- CN-A- 109 222 290
- CN-A- 112 457 540
- CN-A- 113 116 010
- RU-C1- 2 280 050
- US-A1- 2019 168 050

## Description

### FIELD OF THE INVENTION

The present disclosure relates to a process for manufacturing a nitrile glove and the nitrile glove product resulting from such process.

### BACKGROUND OF THE INVENTION

Polycyclic aromatic hydrocarbons (PARs) are a group of chemicals that are toxic in nature. The common sources of PAHs in consumer products are extender oils and carbon black.

To impart surface roughness to nitrile gloves, particularly black nitrile gloves, conventional nitrile gloves are impregnated with organic solvents, including said polycyclic aromatic hydrocarbon (PAHs) resulting from the presence of carbon black in the latex compound formulation. These products potentially fail the regulations for medical use, such as the German GS specification document AfPS GS 2019:01 PAK and EN ISO 21420:2020. Conventionally, those PAHs are considered unavoidable in the processes for manufacturing nitrile gloves, thereby limiting the utility of nitrile gloves.

A representative of conventional processes for manufacturing nitrile gloves that contain a substantial amount of PAHs may be found in the U.S. Patent No. 3,346,518. Further an example of attempts to improve the process for manufacturing nitrile gloves may be found in the International Publication No. WO 2022/031163 A1, the disclosure of which being directed to improving the permeation resistance of nitrile gloves. Document EP0356580 discloses a process for manufacturing a nitrile glove, comprising steps of dipping a former into a latex compound in order to form a nitrile glove, stripping the nitrile glove from the former; washing the nitrile glove; and drying the nitrile glove, wherein (b) said washing comprises further steps of: (i) washing the nitrile glove with a first aqueous solution having 0.16 % by weight of a monoprotic acid compound; (ii) washing the nitrile glove with a second aqueous solution having 1.5 % by weight of a chlorine base compound; and (iii) washing the nitrile glove with water. Document WO 2006/129361 discloses the use of carbon black having excellent dispersion properties for its use in gloves manufacturing. The document US2019168050 discloses the use of sodium hypochlorite to eliminate PAHs in gloves.

There is still a strong yet unfulfilled need to produce a nitrile glove product with no or a medically acceptable level of PAHs.

### SUMMARY OF THE INVENTION

An object of the present invention is to provide a process for manufacturing a nitrile glove that is capable of addressing the above need, wherein the contents of polycyclic aromatic hydrocarbons (PAHs) in the final nitrile glove product is effectively reduced.

The present inventors have discovered that a process according to the present invention is surprisingly effective for said object without significantly complicating or slowing the processes that have been existing in the arts. Also, the present inventors have found that the resulting nitrile glove products contain substantially reduced level of PAHs, aligning the products with the leading medical standards and thereby increasing their utility. All the tests, to be explained below, yielded remarkable results.

In the first aspect, an embodiment is a process for manufacturing a nitrile glove. Said process comprises steps of: dipping a former into a latex compound in order to form a nitrile glove; stripping the nitrile glove from the former; washing the nitrile glove; and drying the nitrile glove. Further, said process is characterized in that: (a) said latex compound comprises a black pigment, said black pigment further comprising: 38 - 42 % by weight of carbon black, 16 - 20 % by weight of a dispersing agent, and 40 - 44 % by weight of water; and (b) said washing comprises further steps of: (i) washing the nitrile glove with a first aqueous solution having 0.020 - 0.090 % by weight of a monoprotic acid compound; (ii) washing the nitrile glove with a second aqueous solution having 0.090 - 0.510 % by weight of a chlorine base compound; and (iii) washing the nitrile glove with water.

While the above characteristics are essential and sufficient to manufacture the nitrile gloves with desirable levels of PAHs in accordance with the object of the present invention, the present inventors have found that the following features would be particularly preferred.

Preferably, the black pigment comprises 40 % by weight of the carbon black. Carbon black is the main colorant of the intended nitrile glove, as well as the main cause of PAHs in the conventionally manufactured nitrile gloves. Within the essential range of 38 - 42 % by weight of the carbon black in the black pigment, the present inventors found that about 40 % by weight of the carbon black produced the nitrile gloves with optimal shade and with minimal to no excess of colorant.

Preferably, the black pigment comprises 18 % by weight of the dispersing agent. Within the essential range of 16 - 20 % by weight of the dispersing agent in the black pigment, the present inventors found that about 18 % by weight of the dispersing agent resulted in the latex compound within which the colorant (e.g. carbon black) was dispersed optimally, thereby producing the nitrile gloves of more consistent color. Although the other weight percentages within said essential range were viable, said other weight percentages resulted in the less stable latex compounds, being correlated with less consistent glove colors in the lower subrange, and flow marks and/or weaker adhesion of colors onto the nitrile gloves in the higher subrange.

Preferably, the black pigment comprises 42 % by weight of the water. The water is the main medium of the black pigment and other additives that may be dispersed therein (the other additives will be mentioned in the Detailed Description below). Within the essential range of 40 - 44 % by weight of the water in the black pigment, the present inventors found that about 42 % by weight of the water produced the nitrile gloves with optimal shade and with minimal to no excess of colorant.

Preferably, the nitrile glove is washed with the first aqueous solution for 5 - 25 minutes. The foregoing duration is optimal for washing the nitrile glove with the first aqueous solution. The present inventors found that, although the washing time outside this range still produced the nitrile gloves with the levels of PAHs that were both desirable and in accordance with the object of the present invention, such would impact upon the other properties of the nitrile gloves. Particularly, washing the nitrile glove with the first aqueous solution for shorter than 5 minutes was correlated with the nitrile gloves' sticky surfaces and hence less comfort when being donned. On the other hand, washing the nitrile glove for longer than 25 minutes was correlated with the latex's denaturation and cracks.

Preferably, the nitrile glove is washed with the second aqueous solution for 5 - 25 minutes. The foregoing duration is optimal for washing the nitrile glove with the second aqueous solution. The present inventors found that, although the washing time outside this range still produced the nitrile gloves with the levels of PAHs that were both desirable and in accordance with the object of the present invention, such would impact upon the other properties of the nitrile gloves. The nature of such impacts were similar to those which the present inventors found in connection with the washing with the first aqueous solution, fully described in the preceding paragraph.

Preferably, the first aqueous solution has 0.023 - 0.083 % by weight of the monoprotic acid compound. Within the essential range of 0.020 - 0.090 % by weight of the monoprotic acid compound in the first aqueous solution, the present inventors found that the preferred subrange of 0.023 - 0.083 % by weight of the monoprotic acid compound was correlated with the nitrile gloves' other desirable properties, particularly comfort when being donned and less likelihood of denaturation and cracks.

Preferably, the second aqueous solution has 0.110 - 0.390 % by weight of the chlorine base compound. Within the essential range of 0.090 - 0.510 % by weight of the chlorine base compound in the second aqueous solution, the present inventors found that the preferred subrange of 0.110 - 0.390 % by weight of the chlorine base compound was correlated with the nitrile gloves' other desirable properties, particularly comfort when being donned and less likelihood of denaturation and cracks.

In an exemplary embodiment, the monoprotic acid compound is hydrochloric acid (HCl).

In an exemplary embodiment, the chlorine base compound is sodium hypochlorite (NaOCl).

Preferably, the nitrile glove is washed with water for 5 - 15 minutes. The purpose of said washing is to remove chemical residues upon the nitrile gloves' surface.

More preferably, the nitrile glove is washed with water at least two times, each time for 5 - 15 minutes.

Even more preferably, the nitrile glove is washed with water at least four times, each time for 5 - 15 minutes.

Most preferably, the nitrile glove is washed with water five times, each time for 5 - 15 minutes. The present inventors found that washing the nitrile glove with water for more than five times, or for a duration longer than 15 minutes per each time, would not significantly improve the removal of the chemical residues.

In the second aspect, an embodiment is a nitrile glove resulting from any one of the embodiments in accordance with the first aspect. Said nitrile glove is characterized in that it contains total polycyclic aromatic hydrocarbons (PAHs) at an undetectable level when measured in accordance with the German GS specification document standard AfPS GS 2019:01 PAK.

Preferably, said nitrile glove resulting from said process contains total polycyclic aromatic hydrocarbons (PAHs) of less than 1 ppm.

In an exemplary embodiment, said nitrile glove is a black nitrile glove.

### BRIEF DESCRIPTION OF DRAWINGS

The principle of the present invention and its advantages will become apparent in the following description, taking into consideration the accompanying drawing in which:
FIG. 1 shows a schematic flowchart of a process in accordance with a preferred embodiment.
FIG. 2 shows a schematic flowchart of a chlorination step in accordance with a preferred embodiment.

### DETAILED DESCRIPTION OF EMBODIMENTS OF THE INVENTION

It is to be understood that the following detailed description will be directed to embodiments, provided as examples for illustrating the concept of the present invention only. The present invention is in fact not limited to particular embodiments described, as such may, of course, vary. It is also to be understood that the terminology used herein is for the purpose of describing particular embodiments only, and is not intended to be limiting, since the scope of this invention will be limited only by the appended claims.

The detailed description of the invention is divided into various sections only for the reader's convenience and disclosure found in any section may be combined with that in another section.

Unless defined otherwise, all technical and scientific terms used herein have the same meaning as commonly understood by one of ordinary skills in the art to which this invention belongs.

It must be noted that as used herein and in the appended claims, the singular forms "a", "an", and "the" include plural referents unless the context clearly dictates otherwise.

The term "about" when used before a numerical designation, e.g., dimensions, time, amount, and such other, including a range, indicates approximations which may vary by ( + ) or ( - ) 10 %, 5 % or 1 %, or any sub-range or sub-value there between.

"Comprising" or "comprises" is intended to mean that the compositions and methods include the recited elements, but not excluding others. "Consisting essentially of" when used to define compositions and methods, shall mean excluding other elements of any essential significance to the combination for the stated purpose. Thus, a device or method consisting essentially of the elements as defined herein would not exclude other materials or steps that do not materially affect the basic and novel characteristic(s) of the claimed invention. "Consisting of" shall mean excluding more than trace elements of other ingredients and substantial method steps. Embodiments defined by each of these transition terms are within the scope of this invention.

"Nitrile glove" refers to a glove product made of a synthetic latex or synthetic rubber, particularly a latex or rubber derived from acrylonitrile and butadiene.

"Polycyclic aromatic hydrocarbon (PAHs)" refers to a group of hydrocarbons made up from multiple interconnected benzene rings. Exemplary PAHs include the following 18 species: acenaphthene, acenaphthylene, anthracene, benzo[a]anthracene, benzo[a]pyrene, benzo[b]fluoranthene, benzo[e]pyrene, benzo[g,h,l]perylene, benzo[j]fluoranthene, benzo[k]fluoranthene, chrysene, dibenzo[a,h]anthracene, fluoranthene, fluorine, naphthalene, phenanthrene, pyrene, and indenol[1,2,3-cd]pyrene.

"Carbon black" refers to a form of virtually pure elemental carbon. It is produced in a controlled industrial process, including vapor-phase pyrolysis and partial combustion. Its external dimensions (aggregates and agglomerates) are typically larger than the nanoscale range. Exemplary variants of carbon black include acetylene black, channel black, furnace black, lampblack, and thermal black.

"Dispersing agent" or "dispersant" refers to a substance, typically a surfactant, that is added to a suspension of solid or liquid particles in a liquid (such as a colloid or emulsion) in order to improve the separation of the particles and to prevent their settling or clumping or to avoid the aggregation and precipitation. Exemplary dispersants include plasticizers, superplasticizers, organophosphorous compounds, polyelectrolytes, and alkyl-polyethyleneglycol.

"Coagulating agent" or "coagulant" refers to a substance that is added to cause latex particles to aggregate onto the former in order to form a weak, water containing film (i.e. a wet gel). Exemplary coagulants include calcium nitrate, calcium chloride, and ammonium nitrate.

"Accelerator" refers to a chemical added into a rubber/latex compound in order to increase the speed of vulcanization. Exemplary accelerators include dithiocarbamates, such as zinc dibutyldithiocarbamate (ZDBC) and zinc diethyldithiocarbamate (ZDEC).

"Activator" refers to inorganic and organic chemicals used to activate the action of accelerators. These chemicals reduce the vulcanization time (cure time) by increasing the rate of vulcanization. Exemplary activators include zinc (II) oxide (ZnO).

"Antioxidant" refers to a substance that is added in order to extend the useful service life of a glove product by protecting it against an attack/degradation by oxygen (O₂). Exemplary antioxidants include a compound having phenol or amine functional group.

"Preservative" refers to a chemical that is added to a rubber/latex compound in order to control the coagulation of rubber/latex particles, thereby stabilizing the compound during the maturation time. Exemplary preservatives include ammonia (NH₃) and potassium hydroxide (KOH).

"Monoprotic acid compound" refers to an acid compound containing only one ionizable hydrogen atom in each molecule, irrespective of the total hydrogen atoms in the same molecule. As such, examples of monoprotic acid compounds include: nitric acid (HNO₃), hydrochloric acid (HCl), acetic acid (CH₃CO₂H), and hydrogen cyanide (HCN).

"Chlorine base compound" or "chlorine-releasing compound" refers to a chemical compound containing at least one ionizable chlorine atom. Chlorine base compounds are commonly found in disinfectants and bleaches. Exemplary chlorine base compounds include: sodium hypochlorite (NaOCl), chloramine, halazone, and sodium dichloroisocyanurate.

"Water" includes tap water, distilled or otherwise purified water, with or without impurities or additives such as detergent or water softener/hardener, so long as such consists essentially of water and is considered appropriate for the respective use in an industrial facility for manufacturing a medical-grade product. Said appropriateness may be determined by a person of normal skills in the relevant art.

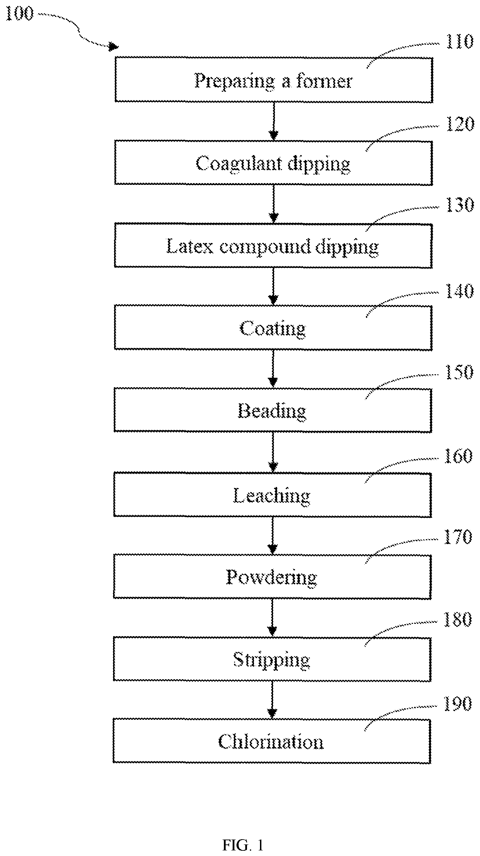

Fig. 1 shows a schematic flowchart of a process in accordance with a preferred embodiment. In this embodiment, a process for manufacturing a nitrile glove 100 comprises subcomponent steps of: preparing a former 110, coagulant dipping 120, latex compound dipping 130, coating 140, beading 150, leaching 160, powdering 170, stripping 180, and chlorination 190. In this preferred embodiment, technical characteristics according to the concept of the present invention are embodied in the steps of latex compound dipping 130 and chlorination 190, which will be apparent in the later part of this Detailed Description. The overview of the process 100 afforded by Fig. 1 also shows that the concept of the present invention may be incorporated into an existing process in the arts with minimal complications.

In this embodiment, the process 100 starts with preparing the former 110. Said former means a mold embodying a shape of the intended glove products. The formers are normally positive molds which may be made of suitable metals or ceramics. Here, the former may be a clean one or that which has been returned from the step of stripping 180. In the preferred step of preparing the former 110, the former is washed with an acid aqueous solution containing 1.5 - 2.5 % weight of the acid compound per volume of water, at a temperature of 50 - 65 °C for 0.10 to 0.15 minutes, and then washed with an alkali aqueous solution containing 0.5 - 1.5 % weight of the known alkaline cleaning agent per volume of water, at a temperature of 50 - 70 °C for another 0.10 - 0.15 minutes. Afterwards, the former is washed with water twice, each time at a temperature of 70 - 90 °C and for 0.14 - 0.22 minutes, before being dried. The drying may be carried out by any suitable equipment in any condition and duration that is suitable for effectively removing moisture from the surface of former made of the respective material. Decision criteria for said suitability are well known in the arts and thus omitted from this Detailed Description for brevity. In this preferred embodiment, however, the drying is carried out in a closed space, particularly in an oven, so as to prevent the former's surface from collecting airborne contaminants that may interfere with the next step of coagulant dipping 120.

In this embodiment, the step of coagulant dipping 120 involves immersing the former obtained from the preparation step 110 in a coagulant. Here, the coagulant is an aqueous solution of calcium nitrate (Ca(NO₃)₂) containing 6.2 - 9.8 % by weight of calcium nitrate per volume of water. The immersion/dipping is preferably carried out at the coagulant's temperature of 65 - 86 °C and for 0.12 - 0.18 minutes. Consequently, the former is covered with the coagulant before being dried at the temperature of 75 - 100 °C for 0.53 - 0.81 minutes. Said drying is preferably carried out in an oven in order to prevent an interference by airborne contaminants. The process 100 then proceeds to the step of latex compound dipping 130.

In this embodiment, the step of latex compound dipping 130 involves immersing the former, already covered with a dry coagulant, into a latex compound. The coagulant induces deposition of latex particles onto the former in order to form a wet film which constitutes a primary body of the intended nitrile glove.

The latex compound in this preferred embodiment is formulated in accordance with the present invention's characteristic technical concept. Particularly, said preferred latex compound consists essentially of: (i) 93.66 - 93.86 % by weight of nitrile butadiene rubber (NBR); (ii) 1.31 - 1.51 % by weight of a black pigment, the composition of which will be described fully below; (iii) 1.49 - 1.69 % by weight of an activator; (iv) 0.28 - 0.48 % by weight of zinc dibutyldithiocarbamate (ZDBC); (v) 0.37 - 0.57 % by weight of zinc diethyldithiocarbamate (ZDEC); (vi) 1.12 -1.32 % by weight of sulfur (S₈); (vii) 0.09 - 0.29 % by weight of an antioxidant; and (viii) 0.98 % by weight of a preservative. In this embodiment, the latex compound of said formulation may be prepared by a known means of mixing that is conventionally used for preparing liquid dispersion materials.

In this preferred embodiment, the said black pigment further comprises: 38 - 42 % by weight of carbon black, 16 - 20 % by weight of a dispersing agent, and 40 - 44 % by weight of water.

In the step of latex compound dipping 130, the former is immersed in the latex compound at a temperature of 25 - 35 °C for 0.21 - 0.32 minutes. The former, thus covered with the wet latex compound with the effect of coagulant, is then dried at a temperature of 70 - 100 °C for 0.67 - 1.03 minutes. Said drying is preferably carried out in an oven for reasons similar to the above. The former thus covered in the dried latex compound film is subsequently forwarded to the next step of coating 140.

After the step of latex compound dipping 130, the nitrile glove begins to form upon the surface of the former while still being deposited thereupon.

In this embodiment, the step of coating 140 involves coating the nitrile glove which, following the step of latex compound dipping 130, has begun to form upon the surface of the former. The purpose of coating is to impart the nitrile glove's surface with smoothness that is conducive to donning. The coating is preferably carried out by dipping the former into an acrylic-type coating, said acrylic-type coating being dispersed in water at a total solid content (TSC) of 1.5 - 2.5 %, at a temperature of 25 - 40 °C and for 0.11 - 0.16 minutes.

In this embodiment, the step of beading 150 involves rolling the open-ended sleeve of the nitrile glove, still being deposited upon the former. Said rolling in this preferred embodiment is carried out by way of feeding the former into a sequence of brushes so that each of said brushes incrementally rolls the open end of the nitrile glove, thereby forming a round cuff at said end. Further detail of the beading that is applicable to this embodiment may be found in the conventional arts. The step of beading 150 ends with drying the beaded nitrile glove at a temperature of 110 - 130 °C for 0.05 - 0.07 minutes, preferably in an oven for reasons similar to the above.

In this preferred embodiment, the next step of leaching 160 further comprises pre-leaching, and then post-leaching, the nitrile glove, in order to remove residual chemicals from the nitrile glove, which is still being deposited on the former. Said pre-leaching is carried out by dipping the former into water at an ambient temperature for 0.46 - 0.71 minutes. The pre-leached nitrile glove is then dried at a temperature of 65 - 85 °C for 1.59 - 2.43 minutes, preferably in an oven for reasons similar to the above. Next, said post-leaching is carried out by dipping the nitrile glove in water at a temperature of 75 - 90 °C for another 0.43 - 0.65 minutes.

The process 100 then proceeds to the step of powdering 170 which in this preferred embodiment is carried out by dipping the former into powder, said powder being dispersed in water at a total solid content (TSC) of 1.0 - 5.0 %, for 0.04 - 0.06 minutes. The step of powdering ends with drying the powdered nitrile glove at a temperature of 100 to 130 °C for 0.87 - 1.32 minutes, preferably in an oven for reasons similar to the above.

The stripping step 180 follows in order to remove the nitrile glove, then adequately formed and stable, from the former. In this preferred embodiment, the stripping step 180 may be carried out by any conventional means, though in this preferred embodiment it is carried out by gripping and pulling the nitrile glove from the former. At the end of the stripping step 180, the blank former is returned to the step of preparing the former 110 which cleans and prepares the former for the next cycle from the step of coagulant dipping 120 through the step of stripping 180; while the nitrile glove, now removed from the former, is dried at a temperature of 80 - 120 °C for 0.87 - 1.32 minutes in an oven before being forwarded to the step of chlorination 190.

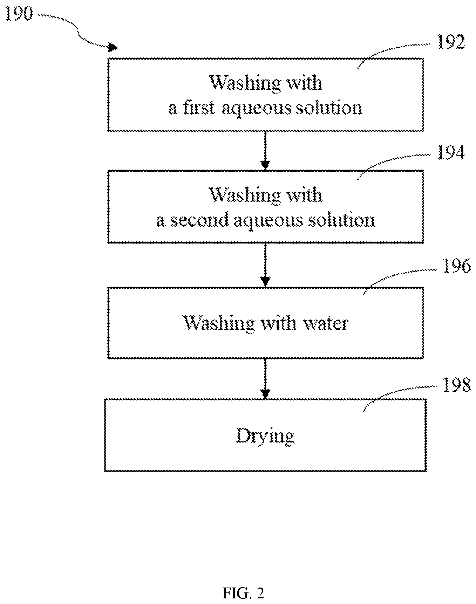

In this preferred embodiment, the chlorination step 190 is an off-line process which will be further described in association with Fig. 2.

Fig. 2 shows a schematic flowchart of the chlorination step 190 in accordance with a preferred embodiment. In this embodiment, the chlorination step 190 further comprises subcomponent steps of: washing the nitrile glove with a first aqueous solution 192, washing the nitrile glove with a second aqueous solution 194, washing the nitrile glove with water 196, and drying 198. The order of the foregoing subcomponent steps need not always accord with that shown in Fig. 2, though the present inventors have found such order as depicted more preferable than other variants.

In this preferred embodiment, the chlorination step begins with washing the nitrile glove with the first aqueous solution 192. Said first aqueous solution is formulated in accordance with the present invention's characteristic technical concept, and thus contains 0.020 - 0.090 % by weight of a monoprotic acid compound. Here, the nitrile glove is washed with said first aqueous solution at a room temperature for 5 - 25 minutes before being forwarded to the next step of washing the nitrile glove with the second aqueous solution 194.

In this preferred embodiment, said second aqueous solution is formulated in accordance with the present invention's characteristic technical concept, and thus contains 0.090 - 0.510 % by weight of a chlorine base compound. Here, the nitrile glove is washed with said second aqueous solution at a room temperature for another 5 - 25 minutes before being forwarded to the next step of washing the nitrile glove with water 196.

In this preferred embodiment, the step of washing the nitrile glove with water 196 comprises washing the nitrile glove with water five times, each time at a room temperature and for 5 - 15 minutes.

The foregoing steps 192, 194, 196 may take place in different or same vessel according to circumstantial design choices. The minimum requirement for a vessel for any of the foregoing steps 192, 194, 196 is that such must be suitable for containing water and said aqueous solutions at the specified temperatures. Preferably, such vessel also suitable for exerting mechanical agitation, such as shaking and rotation, upon its content.

Next, the nitrile glove is forwarded to the step of drying 198. In this preferred embodiment, the drying is carried out at a temperature of 80 - 130 °C for 60 - 80 minutes in an oven in order to prevent an interference by airborne contaminants.

The resulting nitrile glove is then left to cool at a room temperature before being collected for further inspection, storage and/or packaging.

### EXAMPLE OF A PREFERRED EMBODIMENT

A process in accordance with a preferred embodiment was run according to the below particulars:
In these examples, the preferred embodiment were used in the manufacture of black nitrile gloves. In the step of preparing the former 110, the formers, which were made of known ceramics, was first washed in a tank containing 1,300 liters of an aqueous solution comprising 1.70 % by weight of nitric acid (HNO₃) per volume of water at 60 °C for 0.10 minutes. Next, the formers were washed in a tank containing 1,300 liters of another aqueous solution comprising 1.0 % by weight of known alkaline cleaning agent per volume of water at 60 °C for another 0.10 minutes. Afterwards, the formers were washed twice in a tank containing 900 liters of water, each time at a temperature of 85 °C and for 0.14 minutes. The formers were then dried in an industrial oven until water was effectively removed.

In the step of coagulant dipping 120, the formers were dipped into a tank containing 1,130 liter of an aqueous solution comprising 7.0 % by weight of calcium nitrate (Ca(NO₃)₂) per volume of water at 73 °C for 0.53 minutes. The formers were then dried in an industrial oven until water was effectively removed.

In the step of latex compound dipping 130, the black pigments were prepared by mixing 40 % by weight of carbon black with 18 % by weight of dispersing agent and 42 % by weight of water. Said black pigments were used in Examples 1 - 5 as shown in Table 1 further below.

Further in the step of latex compound dipping 130, the latex compounds were prepared by forming a dispersion in water consisting essentially of the following: (i) 93.76 % by weight of nitrile butadiene rubber (NBR); (ii) 1.41 % by weight of the black pigment as described in the above paragraph and further below in Table 1; (iii) 1.59 % by weight of the activator which was zinc (II) oxide (ZnO); (iv) 0.38 % by weight of zinc dibutyldithiocarbamate (ZDBC); (v) 0.47 % by weight of zinc diethyldithiocarbamate (ZDEC); (vi) 1.22 % by weight of sulfur (S₈); (vii) 0.19 % by weight of an antioxidant; and (viii) 0.98 % by weight of the preservative which was an ammonia (NH₃) solution.

The formers were dipped into a tank containing 4,100 liters of said latex compound of the abovementioned formulation at 30 °C and for 0.21 minutes. Afterwards, the formers, thus covered with the wet latex compound with the effect of coagulant, were then dried in an industrial oven at 100 °C and for 0.67 minutes.

Subsequently in the step of coating 140, the formers, upon which the black nitrile gloves had begun to form, were dipped into a tank containing 950 liters of the acrylic-type coating comprising at least 15 % by weight of acrylic polymer at 27 °C and for 0.11 minutes.

The formers were then forwarded to the step of beading 150 which was carried out according to the preferred embodiment, after which the black nitrile gloves were dried in an industrial oven at 130 °C and for 0.05 minutes.

Next, the step of leaching 160 involved the pre-leaching, in which the formers were dipped into a tank containing water at an ambient temperature and for 0.46 minutes, before being dried in an industrial oven at 85 °C and for 1.59 minutes; and then the post-leaching, in which the formers were dipped into a tank containing water at 85 °C and for 0.43 minutes.

In the step of powdering 170, the formers were dipped into a tank containing 900 liters of the powder dispersed in water at a total solid content (TSC) of 3.0 % and for 0.04 minutes, before being dried in an industrial oven at 130 °C and for another 0.87 minutes.

After the black nitrile gloves were stripped according to the preferred embodiment of the stripping step 180, the formers were returned to the step of preparing the former 110 and the black nitrile gloves, then removed from the formers, were dried in an industrial oven at 100 °C and for 0.87 minutes.

The black nitrile gloves were then forwarded to the step of chlorination 190.

The step of chlorination 190 began with washing the nitrile glove with the first aqueous solution 192, and then proceeded to washing the nitrile glove with the second aqueous solution 194.

Said first aqueous solutions, comprising 0.020, 0.090, 0.045, 0.058, and 0.055 % by weight of hydrochloric acid (HCl) in water, were used in Examples 1 - 5 as shown in Table 1 further below.

Said second aqueous solutions, comprising 0.510, 0.090, 0.147, 0.352, and 0.032 % by weight of sodium hypochlorite (NaOCl) were used in Examples 1 - 5 as shown in Table 1 further below.

In the step of washing the nitrile glove with the first aqueous solution 192, the black nitrile gloves were washed in a tank containing 1,500 liters of the first aqueous solution of the above formulation at a room temperature and for 25, 5, 5, 15, and 10 minutes in Examples 1 - 5 as shown in Table 1 further below.

In the step of washing the nitrile glove with the second aqueous solution 194, the black nitrile gloves were washed in a tank containing 1,500 liters of the second aqueous solution of the above formulation at a room temperature and for 5, 25, 15, 20, and 25 minutes in Examples 1 - 5 as shown in Table 1 further below.

Subsequently, the black nitrile gloves were washed according to the step of washing the nitrile glove with water 196, in which the black nitrile gloves were washed in a tank containing 1,500 liters of water for 5 times, each time for 5, 15, 10, 15, and 13 minutes in Examples 1 - 5 as shown in Table 1 further below.

| | Black pigment | | | First aqueuos solution | | Second aqueuos solution | | Washing with water | |
|---|---|---|---|---|---|---|---|---|---|
| | % wt. carbon black | % wt. dispersing agent | % wt. water | % wt. HCl | Washing time (minutes) | % wt. NaOCl | Washing time (minutes) | Number of rounds | Time per round (minutes) |
| Example 1 | 40 | 18 | 42 | 0.020 | 25 | 0.510 | 5 | 5 | 5 |
| Example 2 | 40 | 18 | 42 | 0.090 | 5 | 0.090 | 25 | 5 | 15 |
| Example 3 | 40 | 18 | 42 | 0.045 | 5 | 0.147 | 15 | 5 | 10 |
| Example 4 | 40 | 18 | 42 | 0.058 | 15 | 0.352 | 20 | 5 | 15 |
| Example 5 | 40 | 18 | 42 | 0.055 | 10 | 0.232 | 25 | 5 | 13 |

### ANALYSES OF GLOVE RESULTED FROM A PREFERRED EMBODIMENT

The above example of preferred embodiment was run in 4 repetitions, and the resulting gloves were subsequently sampled and analyzed for their polycyclic aromatic hydrocarbons (PAHs) contents according to the German GS specification document standard AfPS GS 2019:01 PAK. Said analyses under said standards were also run for "Comparative Samples," which represented the state of the art: the Comparative Samples were nitrile gloves manufactured in accordance with conventional processes.

The analytical method was solvent extraction and quantification by gas chromatography mass spectrometry (GC-MS). The detection limit was 0.2 ppm. As such, the analytical results below said limit were considered "non-detected" (ND). In order to meet the requirements under Category 1 of the AfPS GS 2019:01 PAK standard, the sample must contain the following chemicals within the following limits:
- Each of the following PAHs must be ND: benzo[a]pyrene, benzo[e]pyrene, benz[a]anthracene, benzo[b]fluoranthene, benzo[j]fluoranthene, benzo[k]fluoranthene, chrysene, dibenz[a,h]antracene, benzo[g,h,l]perylene, and indeno [1,2,3-cd]pyrene.
- The total content of the following PAHs must be lower than 1 ppm: phenanthrene, pyrene, anthracene, and fluoranthene.
- The content of naphthalene must be lower than 1 ppm.
- The total content of all the abovementioned PAHs must be lower than 1 ppm.

The analytical results are provided in the following Table 2, which shows that a process in accordance with an embodiment and nitrile glove products resulting therefrom exhibited results which were distinctly and surprisingly improved over the nitrile gloves manufactured in accordance with the state of the art.

| No. | Chemical Name | Sample's Analytical Results (ppm of the chemical) | | | | | | | |
|---|---|---|---|---|---|---|---|---|---|
| | | Comparative Sample 1 | Comparative Sample 2 | Comparative Sample 3 | Sample from Table 1, Example 1 | Sample from Table 1, Example 2 | Sample from Table 1, Example 3 | Sample from Table 1, Example 4 | Sample from Table 1, Example 5 |
| 1. | Benzo[a]pyrene | ND | ND | ND | ND | ND | ND | ND | ND |
| 2. | Benzo[e]pyrene | ND | ND | ND | ND | ND | ND | ND | ND |
| 3. | Benz[a]anthracene | ND | ND | ND | ND | ND | ND | ND | ND |
| 4. | Benzo[b]fluoranthene | ND | ND | ND | ND | ND | ND | ND | ND |
| 5. | Benzo[j]fluoranthene | ND | ND | ND | ND | ND | ND | ND | ND |
| 6. | Benzo[k]fluoranthene | ND | ND | ND | ND | ND | ND | ND | ND |
| 7. | Chrysene | ND | ND | ND | ND | ND | ND | ND | ND |
| 8. | Dibenz[a,h]anthracene | ND | ND | ND | ND | ND | ND | ND | ND |
| 9. | Benzo[g,h,l]perylene | 0.69 | ND | ND | ND | ND | ND | ND | ND |
| 10. | Indeno[1.2.3-cd]pyrene | ND | ND | ND | ND | ND | ND | ND | ND |
| 11. | Phenanthrene | ND | ND | ND | ND | ND | ND | ND | ND |
| 12. | Pyrene | 1.37 | 0.92 | 3.35 | ND | ND | ND | ND | ND |
| 13. | Anthracene | ND | ND | ND | ND | ND | ND | ND | ND |
| 14. | Fluoranthene | 0.49 | 0.23 | 0.89 | ND | ND | ND | ND | ND |
| 15. | Napthalene | ND | ND | ND | ND | ND | ND | ND | ND |
| 16. | Sum of Nos. 11 - 14 | 1.86 | 1.15 | 4.24 | ND | ND | ND | ND | ND |
| 17. | Sum of Nos. 1 - 15 (total PAHs) | 2.55 | 1.15 | 4.24 | ND | ND | ND | ND | ND |

## Claims

1. A process for manufacturing a nitrile glove, comprising steps of: dipping a former into a latex compound in order to form a nitrile glove; stripping the nitrile glove from the former; washing the nitrile glove; and drying the nitrile glove, said process being **characterized in that**:
(a) said latex compound comprises a black pigment, said black pigment further comprising: 38 - 42 % by weight of carbon black, 16 - 20 % by weight of a dispersing agent, and 40 - 44 % by weight of water; and
(b) said washing comprises further steps of:
(i) washing the nitrile glove with a first aqueous solution having 0.020 - 0.090 % by weight of a monoprotic acid compound;
(ii) washing the nitrile glove with a second aqueous solution having 0.090 - 0.510 % by weight of a chlorine base compound; and
(iii) washing the nitrile glove with water.

2. The process according to claim 1, wherein the black pigment comprises 40 % by weight of the carbon black.

3. The process according to claim 1, wherein the black pigment comprises 18 % by weight of the dispersing agent.

4. The process according to claim 1, wherein the black pigment comprises 42 % by weight of the water.

5. The process according to claim 1, wherein the nitrile glove is washed with the first aqueous solution for 5 - 25 minutes.

6. The process according to claim 1, wherein the nitrile glove is washed with the second aqueous solution for 5 - 25 minutes.

7. The process according to claim 1, wherein the first aqueous solution has 0.023 - 0.083 % by weight of the monoprotic acid compound.

8. The process according to claim 1, wherein the second aqueous solution has 0.110 - 0.390 % by weight of the chlorine base compound.

9. The process according to claim 1, wherein the monoprotic acid compound is hydrochloric acid (HCl).

10. The process according to claim 1, wherein the chlorine base compound is sodium hypochlorite (NaOCl).

11. The process according to claim 1, wherein the nitrile glove is washed with water at most five times, each time for 5 - 15 minutes.

12. The process according to claim 1, wherein the nitrile glove resulting from said process contains total polycyclic aromatic hydrocarbons (PAHs) at an undetectable level when measured in accordance with the German GS specification document standard AfPS GS 2019:01 PAK.

13. The process according to claim 1, wherein the nitrile glove resulting from said process contains total polycyclic aromatic hydrocarbons (PAHs) of less than 1 ppm.

14. A nitrile glove product obtained from the process according to any one of claims 1 - 13

15. The nitrile glove product according to claim 14 that is a black nitrile glove.

## Patentansprüche

1. Verfahren zur Herstellung eines Nitrilhandschuhs, umfassend die folgenden Schritte:
Eintauchen einer Form in eine Latexmischung, um einen Nitrilhandschuh zu formen; Abziehen des Nitrilhandschuhs von der Form; Waschen des Nitrilhandschuhs; und Trocknen des Nitrilhandschuhs, wobei das Verfahren **dadurch gekennzeichnet ist, dass**:
(a) die Latexmischung ein schwarzes Pigment enthält, wobei das schwarze Pigment ferner umfasst: 38-42 Gew.-% Ruß, 16-20 Gew.-% eines Dispergiermittels und 40-44 Gew.-% Wasser; und
(b) das Waschen die folgenden weiteren Schritte umfasst:
(i) Waschen des Nitrilhandschuhs mit einer ersten wässrigen Lösung, die 0,020 - 0,090 Gew.-% einer einbasigen Säureverbindung enthält;
(ii) Waschen des Nitrilhandschuhs mit einer zweiten wässrigen Lösung, die 0,090 - 0,510 Gew.-% einer chlorhaltigen Basenverbindung enthält; und
(iii) Waschen des Nitrilhandschuhs mit Wasser.

2. Verfahren nach Anspruch 1, wobei das schwarze Pigment 40 Gew.-% Ruß umfasst.

3. Verfahren nach Anspruch 1, wobei das schwarze Pigment 18 Gew.-% Dispergiermittel umfasst.

4. Verfahren nach Anspruch 1, wobei das schwarze Pigment 42 Gew.-% Wasser umfasst.

5. Verfahren nach Anspruch 1, wobei der Nitrilhandschuh 5 bis 25 Minuten lang mit der ersten wässrigen Lösung gewaschen wird.

6. Verfahren nach Anspruch 1, wobei der Nitrilhandschuh 5 bis 25 Minuten lang mit der zweiten wässrigen Lösung gewaschen wird.

7. Verfahren nach Anspruch 1, wobei die erste wässrige Lösung 0,023 bis 0,083 Gew.-% der einbasigen Säureverbindung enthält.

8. Verfahren nach Anspruch 1, wobei die zweite wässrige Lösung 0,110 bis 0,390 Gew.-% der chlorhaltigen Basenverbindung enthält.

9. Verfahren nach Anspruch 1, wobei die einbasige Säureverbindung Salzsäure (HCl) ist.

10. Verfahren nach Anspruch 1, wobei die chlorhaltige Basenverbindung Natriumhypochlorit (NaOCl) ist.

11. Verfahren nach Anspruch 1, wobei der Nitrilhandschuh höchstens fünfmal mit Wasser gewaschen wird, jeweils für 5 bis 15 Minuten.

12. Verfahren nach Anspruch 1, wobei der aus diesem Verfahren resultierende Nitrilhandschuh bei einer Messung gemäß der deutschen GS-Spezifikation AfPS GS 2019:01 PAK keine nachweisbaren Gesamtgehalte an polyzyklischen aromatischen Kohlenwasserstoffen (PAK) aufweist.

13. Verfahren nach Anspruch 1, wobei der aus diesem Verfahren resultierende Nitrilhandschuh insgesamt weniger als 1 ppm polyzyklische aromatische Kohlenwasserstoffe (PAK) enthält.

14. Nitrilhandschuhprodukt, das durch das Verfahren nach einem der Ansprüche 1 bis 13 erhalten wird.

15. Nitrilhandschuhprodukt nach Anspruch 14, das ein schwarzer Nitrilhandschuh ist.

## Revendications

1. Procédé de fabrication d'un gant en nitrile, comprenant les étapes suivantes : plonger un moule dans un composé de latex afin de former un gant en nitrile ; retirer le gant en nitrile du moule ; laver le gant en nitrile ; et sécher le gant en nitrile, ledit procédé étant **caractérisé en ce que** :
(a) ledit composé de latex comprend un pigment noir, ledit pigment noir comprenant en outre : 38 à 42 % en poids de noir de carbone, 16 à 20 % en poids d'un agent dispersant, et 40 à 44 % en poids d'eau ; et
(b) ledit lavage comprend en outre les étapes suivantes :
(i) le lavage du gant en nitrile avec une première solution aqueuse contenant 0,020 à 0,090 % en poids d'un composé d'acide monoprotique ;
(ii) le lavage du gant en nitrile avec une deuxième solution aqueuse contenant 0,090 à 0,510 % en poids d'un composé à base de chlore ; et
(iii) le lavage du gant en nitrile avec de l'eau.

2. Procédé selon la revendication 1, dans lequel le pigment noir comprend 40 % en poids de noir de carbone.

3. Procédé selon la revendication 1, dans lequel le pigment noir comprend 18 % en poids d'agent dispersant.

4. Procédé selon la revendication 1, dans lequel le pigment noir comprend 42 % en poids d'eau.

5. Procédé selon la revendication 1, dans lequel le gant en nitrile est lavé avec la première solution aqueuse pendant 5 à 25 minutes.

6. Procédé selon la revendication 1, dans lequel le gant en nitrile est lavé avec la deuxième solution aqueuse pendant 5 à 25 minutes.

7. Procédé selon la revendication 1, dans lequel la première solution aqueuse contient 0,023 à 0,083 % en poids du composé acide monoprotique.

8. Procédé selon la revendication 1, dans lequel la deuxième solution aqueuse contient 0,110 à 0,390 % en poids du composé à base de chlore.

9. Procédé selon la revendication 1, dans lequel le composé d'acide monoprotique est l'acide chlorhydrique (HCl).

10. Procédé selon la revendication 1, dans lequel le composé à base de chlore est l'hypochlorite de sodium (NaOCl).

11. Procédé selon la revendication 1, dans lequel le gant en nitrile est lavé à l'eau au maximum cinq fois, chaque fois pendant 5 à 15 minutes.

12. Procédé selon la revendication 1, dans lequel le gant en nitrile résultant dudit procédé contient des hydrocarbures aromatiques polycycliques (HAP) à un niveau indétectable lorsqu'ils sont mesurés conformément à la norme allemande GS AfPS GS 2019:01 PAK.

13. Procédé selon la revendication 1, dans lequel le gant en nitrile résultant dudit procédé contient une teneur totale en hydrocarbures aromatiques polycycliques (HAP) inférieure à 1 ppm.

14. Gant en nitrile obtenu par le procédé selon l'une quelconque des revendications 1 à 13.

15. Gant en nitrile selon la revendication 14, qui est un gant en nitrile noir.
